(19) Europäisches Patentamt
European Patent Office
Office européen des brevets

(11) Publication number: 0 129 219 A2

# (12) EUROPEAN PATENT APPLICATION

(21) Application number: 84106829.9

(22) Date of filing: 14.06.84

(51) Int. Cl.³: G 03 C 5/54
C 08 F 8/44

(30) Priority: 15.06.83 JP 107411/83

(43) Date of publication of application: 27.12.84 Bulletin 84/52

(84) Designated Contracting States: DE GB

(71) Applicant: FUJI PHOTO FILM CO., LTD.
210 Nakanuma Minami Ashigara-shi
Kanagawa 250-01(JP)

(72) Inventor: Yamanouchi, Junichi
c/o Fuji Photo Film Co., Ltd 210, Nakanuma
Minami Ashigara-shi Kanagawa(JP)

(72) Inventor: Sudo, Yukio
c/o Fuji Photo Film Co., Ltd 210, Nakanuma
Minami Ashigara-shi Kanagawa(JP)

(72) Inventor: Karino, Yukio
c/o Fuji Photo Film Co., Ltd 210, Nakanuma
Minami Ashigara-shi Kanagawa(JP)

(72) Inventor: Sakaguchi, Shinji
c/o Fuji Photo Film Co., Ltd 210, Nakanuma
Minami Ashigara-shi Kanagawa(JP)

(74) Representative: Hansen, Bernd, Dr.rer.nat. et al,
Hoffmann, Eitle & Partner Patentanwälte Arabellastrasse 4
D-8000 München 81(DE)

## (54) Photographic elements.

(57) A photographic element comprising a support having thereon at least one layer provided by coating a composition comprising a polymer mordant latex of a crosslinked polymer comprising a monomer unit represented by formula (I):

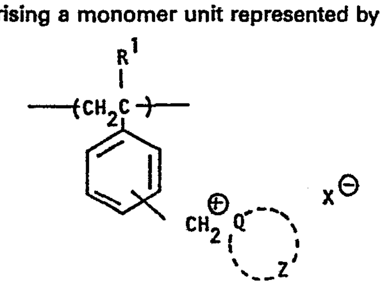

(I)

wherein Q represents a quaternary nitrogen atom; Z represents an atomic group necessary for forming a nitrogen-containing heterocyclic ring formed with Q; said nitrogen-containing heterocyclic ring further contains at least one hetero atom in addition to the quaternary nitrogen atom shown by Q; $R^1$ represents a hydrogen atom or a methyl group; and $X^{\ominus}$ represents an anion.

The polimeric mordant causes reduced chemical change or decomposition of dye image by the action of light, and which provides transferred dye images in a short period of time.

EP 0 129 219 A2

Croydon Printing Company Ltd.

# PHOTOGRAPHIC ELEMENTS

This invention relates to novel copolymers which are good mordants for dyes used in photographic systems and to photographic elements using such copolymers.

It is well known in the photographic art to use various polymers as mordants for preventing the migration of dyes. Various polymeric mordants are disclosed in U.S. Patents Nos. 3,898,088; 3,958,995; 4,131,469 and 4,147,548; West German Patent Application (OLS) No. 2,941,818; and Japanese Patent Application (OPI) (the term "OPI" as used herein designates a "published, unexamined Japanese patent application") Nos. 30,328/78 and 17,352/81. However, when photographic prints containing dyes mordanted by such mordants are exposed to fluorescent light, mercury lamp light, or sunlight, the dyes are chemically changed or decomposed. If the density of the dye images is reduced by the chemical change or decomposition of the dyes, the image quality of the photographic prints is greatly reduced.

Polymeric mordants with reduced chemical change or decomposition of dye images on exposure to light are disclosed in U.K. Patent Nos. 2,011,912 and 2,093,041 and U.S. Patent No. 4,282,305. However, when using these

polymeric mordants, the time required for transferring dyes is greatly prolonged owing to, perhaps, the poor mordanting property of the polymeric mordants, and such mordants are unsuitable for application in diffusion transfer color photography.

A first object of this invention is to provide a photographic element containing a polymeric mordant that causes reduced chemical change or decomposition of dye images by the action of light.

A second object of this invention is to provide a color diffusion transfer photographic element (in particular, a peel-off type) providing transferred dye images in a short period of time after treatment.

As the result of various investigations, the inventors have discovered that the above-described objects can be attained by a photographic element having on a support at least one layer provided by coating a composition comprising a polymeric mordant latex of a copolymer having a monomer unit represented by following general formula (I), said polymer being cross-linked;

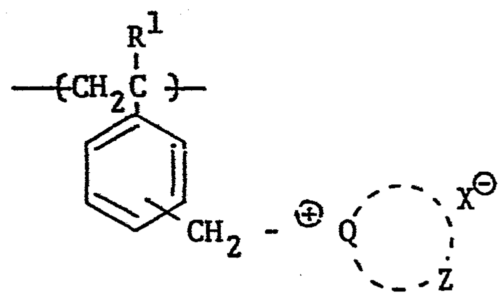

(I)

wherein Q represents a quaternary nitrogen atom, Z represents an atomic group necessary for forming a nitrogen-containing heterocyclic ring with Q, the nucleus of said nitrogen-containing heterocyclic ring further containing at least one hetero atom in addition to the quaternary nitrogen atom shown by Q, $R^1$ represents a hydrogen atom or a methyl group, and $X^{\ominus}$ represents an anion.

Preferred polymeric mordants among the polymers having the monomer unit shown by general formula (I) are a binary or higher copolymer represented by following general formula (II) or (III):

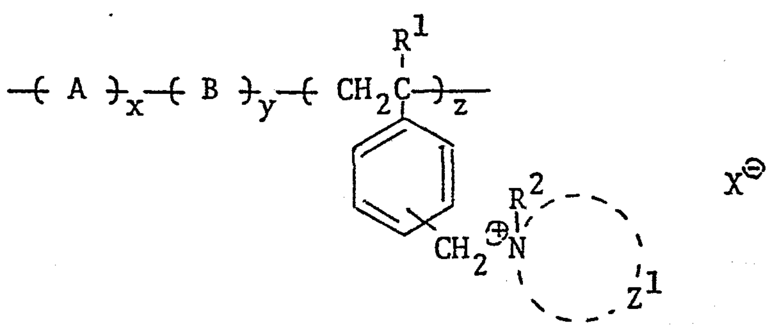

(II)

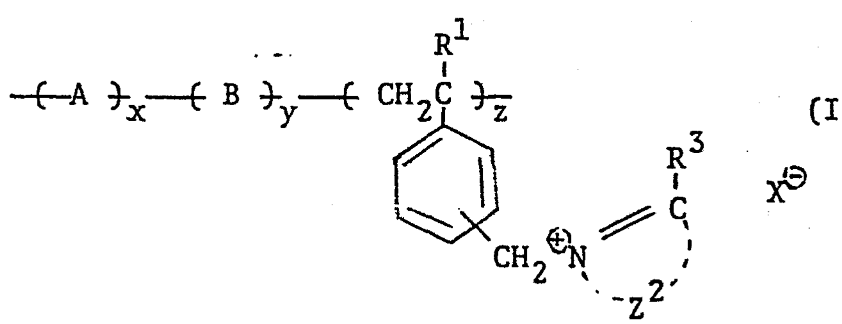

(III)

wherein A represents a monomer unit (linking component) derived from a copolymerizable monomer containing at least two ethylenically unsaturated groups; B represents a monomer unit derived from a copolymerizable ethylenic monomer; $R^1$ represents a hydrogen atom or a methyl group; $R^2$ represents an alkyl group or an aralkyl group; $R^3$ represents a hydrogen atom, alkyl group or an aralkyl group; said alkyl group and aralkyl group shown by $R^2$ and $R^3$ each including substituted and unsubstituted alkyl groups and substituted and unsubstituted aralkyl groups, respectively; $Z^1$ and $Z^2$ each represents an atomic group necessary for completing a nitrogen containing heterocyclic ring and containing at least one hetero atom; wherein $R^2$ and $Z^1$ or $R^3$ and $Z^2$ may form a ring; and in addition the nitrogen-containing heterocyclic ring may form a condensed ring with a nucleus such as a benzene ring; $X^{\ominus}$ represents an anion; generally, x is about 0.05 to about 10 mole%, y is 0 to about 89.95 mole%; and z is about 10 to about 99 mole%.

The comonomer unit represented by formula (I) is the most effective unit to attain the objects of the present invention. Comonomer units represented by formulae (II) and (III) also effective in the mordant property and in preventing of color fading.

The copolymer shown by general formula (II),

(III) or mixture thereof is used as a water-dispersible polymeric mordant dispersion (polymeric mordant latex). The polymer dispersion can be used as a substantially aqueous dispersion without need of an organic solvent such as an alcohol, etc., as described in U.S. Patent No. 3,958,995; Japanese Patent Application (OPI) No. 145,529/79, etc.

The copolymers shown by general formulae (II) and (III) will be further described in detail.

In general formulae (II) and (III), A is a monomer unit derived from a polymerizable monomer having, for example, a structure shown by the formula

$$\left(CH_2=\overset{R^4}{\overset{|}{C}}-\right)_n T$$

wherein n represents an integer greater than 1, preferably 2 or 3; $R^4$ represents a hydrogen atom or a methyl group; and T represents a linkage group such as an amido group (e.g., carboxylic acid amido, sulfoamido, etc.), an ester group (e.g., carboxylic acid ester, sulfonic acid ester), an alkylene group (e.g., a methylene group, an ethylene group, a trimethylene group, etc.), an arylene group (e.g., a phenylene group, a phenyleneoxycarbonyl group, etc.); or a combination of two or more these groups.

Specific examples of the above-described polymerizable monomers are divinylbenzene, ethylene glycol dimethacrylate, propylene glycol dimethacrylate, neopentyl glycol dimethacrylate, tetramethylene glycol diacrylate, tetramethylene glycol dimethacrylate, etc., and among them, divinylbenzene is particularly preferred. Monomers having the above described formula wherein n is 4 are commercially available, and monomers having the formula wherein n is more than 4 can be synthesized.

Specific examples of the ethylenically unsaturated monomer which provides unit B are ethylene, propylene, 1-butene, isobutene, styrene, α-methylstyrene, vinyltoluene, a monoethylenically unsaturated ester of an aliphatic acid (e.g., vinyl acetate, allyl acetate, etc.), an ethylenically unsaturated monocarboxylic acid or dicarboxylic acid ester (e.g., methyl methacrylate, ethyl acrylate, n-butyl acrylate, n-butyl methacrylate, n-hexyl methacrylate, n-octyl acrylate, benzyl acrylate, cyclohexyl methacrylate, 2-ethylhexyl acrylate, etc.), a monoethylenically unsaturated compound (e.g., acrylonitrile, etc.), a diene (e.g., butadiene, isoprene, etc.), etc.; and among them, vinyltoluene, styrene, methyl methacrylate, etc., are particularly preferred. B may contain two or more such monomers.

$R^1$ in general formulae (II) and (III) represents

a hydrogen atom or a methyl group. $R^2$ represents an alkyl group or an aralkyl group. $R^3$ represents a hydrogen atom, an alkyl group, or an aralkyl group.

The alkyl group represented by $R^2$ or $R^3$ includes unsubstituted alkyl groups having preferably 1-10, more preferably 1-6 carbon atoms such as a methyl group, an ethyl group, an n-propyl group, an isopropyl group, an n-butyl group, an isobutyl group, an n-amyl an n-hexyl group, an n-heptyl group, an n-octyl group, an n-ethylhexyl group, an n-nonyl group, an n-decyl group, etc., and substituted alkyl group having preferably 1 - 12 carbon atoms such as an alkoxyalkyl group (e.g., a methoxymethyl group, a methoxyethyl group, a methoxybutyl group, an ethoxyethyl group, an ethoxypropyl group, an ethoxybutyl group, a butoxyethyl group, a butoxypropyl group, a butoxybutyl group, a vinyloxyethyl group, etc.), a cyanoalkyl group (e.g., a 2-cyanoethyl group, a 3-cyanopropyl group, a 4-cyanobutyl group, etc.), a halogenated alkyl group such as halogenated with fluorine, chlorine, etc. (e.g., a 2-fluoroethyl group, a 2-chloroethyl group, a 3-chloropropyl group, etc.), a hydroxyalkyl group (e.g., a 2-hydroxyethyl group, etc.), an alkoxycarbonylalkyl group (e.g., an ethoxycarbonylmethyl group, etc.), an alkenyl-substituted alkyl group (e.g., an allyl group, a 2-butenyl group, etc.), etc.

The above-described aralkyl group represented by $R^2$ or $R^3$ includes unsubstituted aralkyl groups such as a benzyl group, a phenetyl group, a diphenylmethyl group, a naphthylmethyl group, etc., and substituted aralkyl groups having preferably 7 - 12 carbon atoms such as an alkylaralkyl group (e.g., a 4-methylbenzyl group, a 2,5-dimethylbenzyl group, a 4-isopropylbenzyl group, etc.), an alkoxyaralkyl group (e.g., a 4-methoxybenzyl group, a 4-ethoxybenzyl group, a 4-(4-methoxyphenyl)benzyl group, etc.), a cyanoaralkyl group (e.g., a 4-cyanobenzyl group, a 4-(4-cyanophenyl)benzyl group, etc.), a perfluoroalkoxyaralkyl group (e.g., a 4-pentafluoropropoxybenzyl group, a 4-undecafluorohexyloxybenzyl group, etc.), a halogenated aralkyl group, such as halogenated with bromine, chlorine, etc., (e.g., a 4-chlorobenzyl group, a 4-bromobenzyl group, a 3-chlorobenzyl group, a 4-(4-chlorophenyl)benzyl group, a 4-(4-bromophenyl)benzyl group, etc.).

$Z^1$ in general formula (II) and $Z^2$ in general formula (III) each represents an atomic group necessary for completing a nitrogen-containing heterocyclic ring and contains at least one hetero atom. The heterocyclic ring is preferably a 5- to 7-membered ring and the hetero atom contained in $Z^1$ and $Z^2$ is preferably O, N, S, or P. Also, $R^2$ and $Z^1$ or $R^3$ and $Z^2$ may form

an additional ring. Examples of the heterocyclic ring are those which are shown in the following examples of the monomer unit. The heterocyclic ring is usually substituted to the p or m position of the benzene ring in the monomer unit through the methine group.

Specific examples of the monomer unit

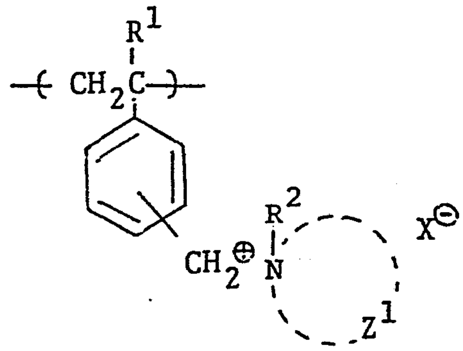

which can be effectively used in general formula (II) of the present invention are illustrated below, but the present invention is not to be construed as limited thereto.

a)

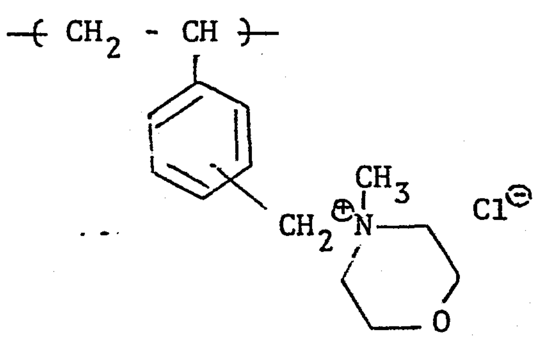

b)

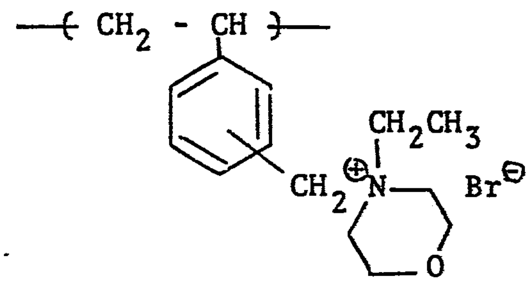

c)

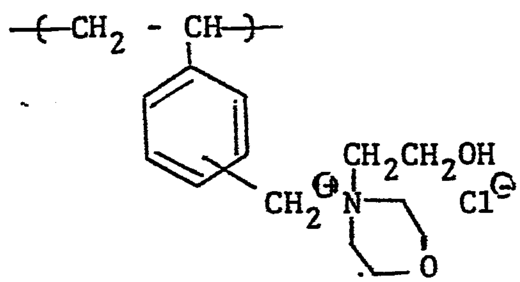

d)

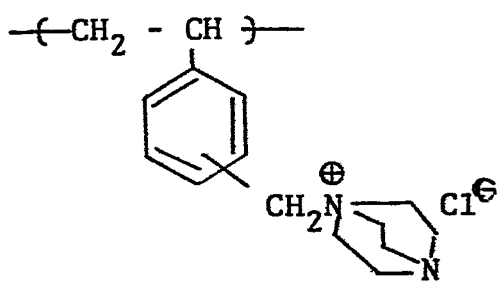

e)

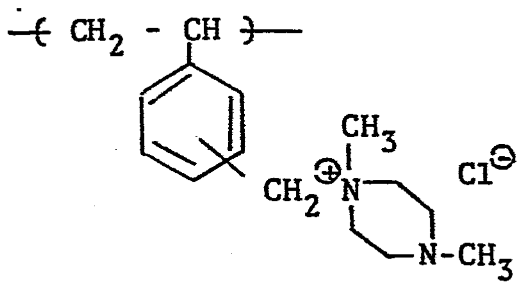

f)

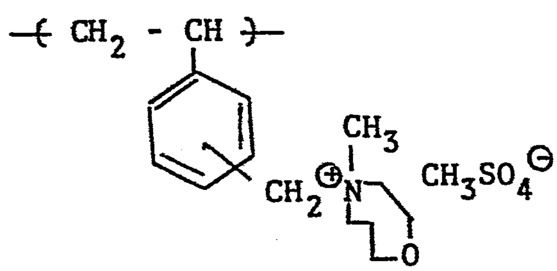

g) 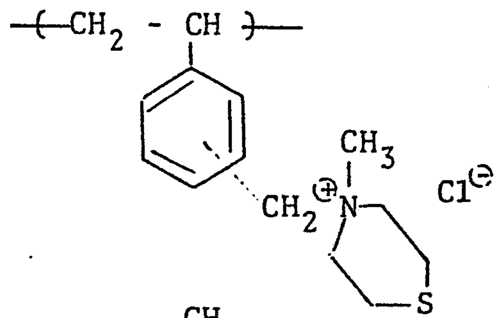

h) 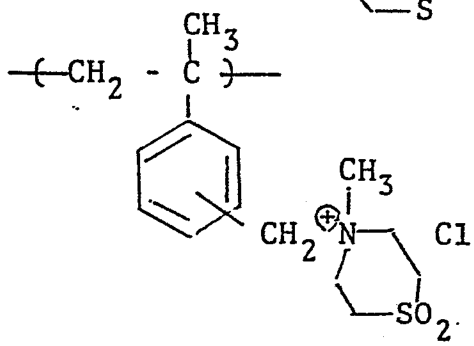

i) 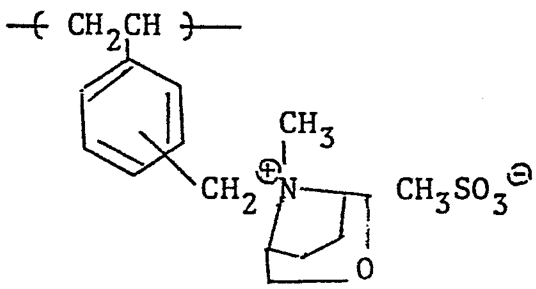

j) 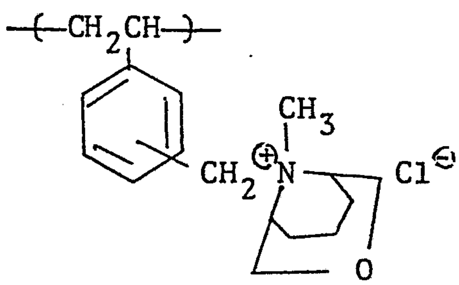

k) 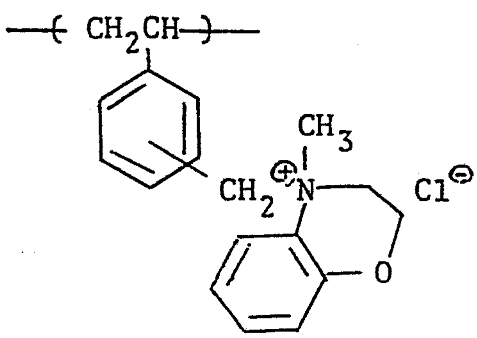

Also a specific examples of the monomer unit

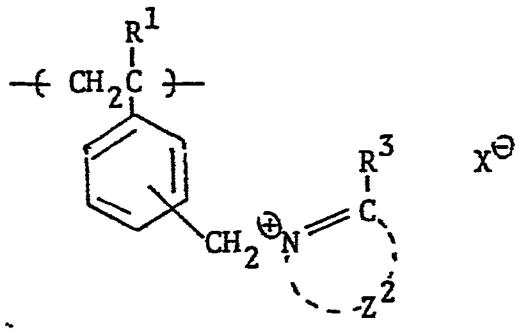

which can be effectively used in general formula (III) of the present invention are illustrated below, but the present invention is not to be construed as limited thereto.

a) 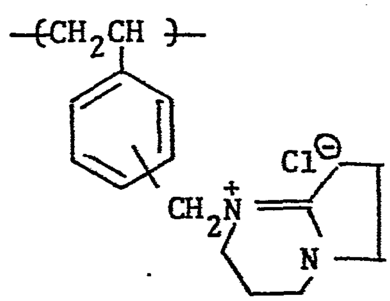

b) 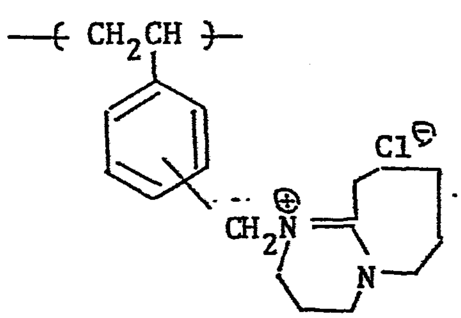

The anion shown by $X^-$ in general formulae (I), (II) and (III) includes, for example, a halide ion (e.g., a chloride ion, a bromide ion, an iodide ion, etc.), an alkylsulfate ion (e.g., a methylsulfate ion, an

ethylsulfate ion, etc.), an alkyl- or arylsulfonate ion (e.g., a methanesulfonate ion, an ethanesulfonate ion, a benzenesulfonate ion, a p-toluene-sulfonate ion, etc.), an acetate ion, a sulfate ion, or the like, and of these anions, a chloride ion is particularly preferred.

Also, x in the above-described general formulae is preferably from about 0.25 mole% to about 10 mole%, most preferably from about 1 mole% to about 5 mole%; y is preferably 0 to about 70 mole%, and z is preferably from about 30 mole% to about 95 mole%.

The dispersion of the polymeric mordant shown by general formula (II) or (III) in this invention can be prepared by emulsion polymerizing the above-described copolymerizable monomer having at least 2 ethylenically unsaturated groups, the copolymerizable ethylenically unsaturated monomer, and an unsaturated monomer (e.g., chloromethylstyrene) shown by the general formula

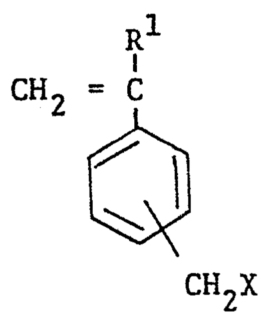

wherein $R^1$ and X are as described above;

and quaternarizing the emulsion polymerized product with

a ternary amine having the structure

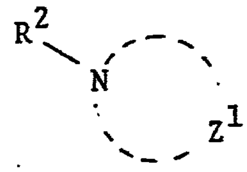

or

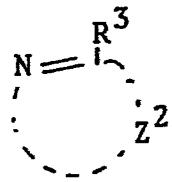

(wherein $R^2$, $R^3$, $Z^1$, and $Z^2$ are as defined above; and $R^2$ and $Z^1$ or $R^3$ and $Z^2$ may form an additional ring) e.g., N-methylmorpholine, N-hydroxyethylmorpholine, N,N'-dimethylpiperazine, 1,4-diazabicyclo[2,2,2]octane, N-methylmorpholine, 1,8-diazabicyclo[5,4,0]-7-undecene, etc.).

Also, the polymer dispersion mordant shown by general formula (II) in this invention can be prepared by emulsion polymerizing the above-described copolymerizable monomer having at least 2 ethylenically unsaturated groups, the copolymerizable ethylenically unsaturated monomer, and an unsaturated monomer represented by the general formula

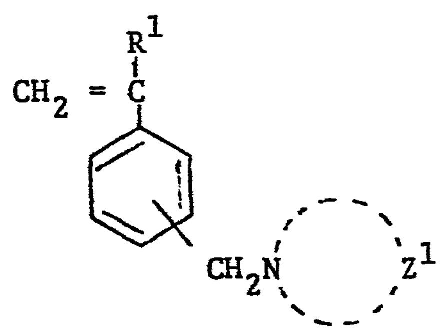

wherein $R^1$ and $Z^1$ are as described above (e.g., N-vinylbenzylmorpholine, etc.); and then quaternarizing

the emulsion polymerized product with an alkylating agent or an aralkylating agent having the structure $R^2$-X (wherein $R^2$ and X are as described above). The above-described polymerization can be conducted in accordance with the method for preparation of a mordant disclosed in U.S. Patent No. 3,958,995.

Examples of this alkylating agent include methyl p-toluenesulfonate, dimethylsulfuric acid, diethylsulfuric acid, ethyl bromide, n-propyl bromide, allyl chloride, n-butyl bromide, chloro-2-butene, ethyl chloroacetate, n-hexyl bromide, n-octyl bromide, etc. Examples of the aralkylating agent having the aforesaid structure are benzyl chloride, benzyl bromide, p-nitrobenzyl chloride, p-chlorobenzyl chloride, p-methylbenzyl chloride, p-isopropylbenzyl chloride, dimethylbenzyl chloride, p-methoxybenzyl chloride, p-pentafluoropropenyloxybenzyl chloride, naphthyl chloride, diphenylmethyl chloride, etc. Among them, p-chlorobenzyl chloride and dimethylbenzyl chloride are preferred.

The above-described emulsion polymerization is generally performed in the presence of at least one surface active agent selected from an anionic surface active agent (e.g., Triton 770, trade name of sodium salt of alkyl-aryl poly(ether sulfate), made by Rohm and Haas Co.), a cationic surface active agent (e.g.,

cetyltrimethyl ammonium chloride, stearyltrimethyl ammonium chloride, etc.), a nonionic surface active agent (e.g., polyvinyl alcohol, etc.) and a radical initiator (e.g., a combination of potassium persulfate and potassium hydrogensulfite).

The above-described quaternarizing reaction is generally performed at a temperature of 0°C to about 100°C, particularly about 30°C to about 80°C.

The polimeric mordant dispersion of this invention can be produced very easily in one reaction vessel throughout the whole production steps without using a large amount of solvent.

The thus obtained polymer dispersion usually has a concentration of 10 - 20 wt%. Preferably, the dispersion is dilluted with water and subjected to coating.

Specific examples of the polymer used in this invention are shown below (the illustrated polymers each containing the following repeating units at the ratio shown below), but the present invention is not to be construed as being limited thereto.

1.

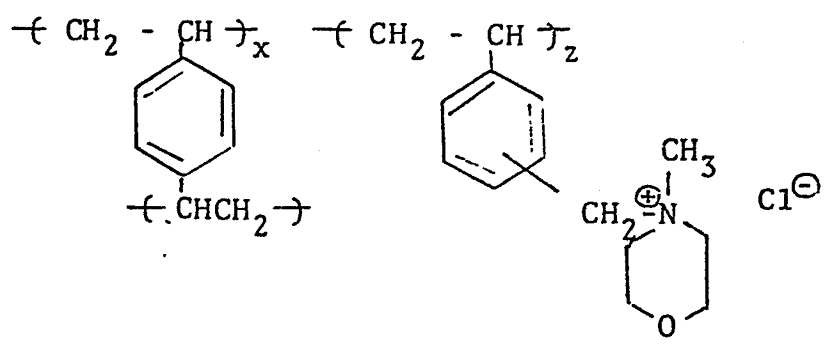

x:z = 5:95

2.

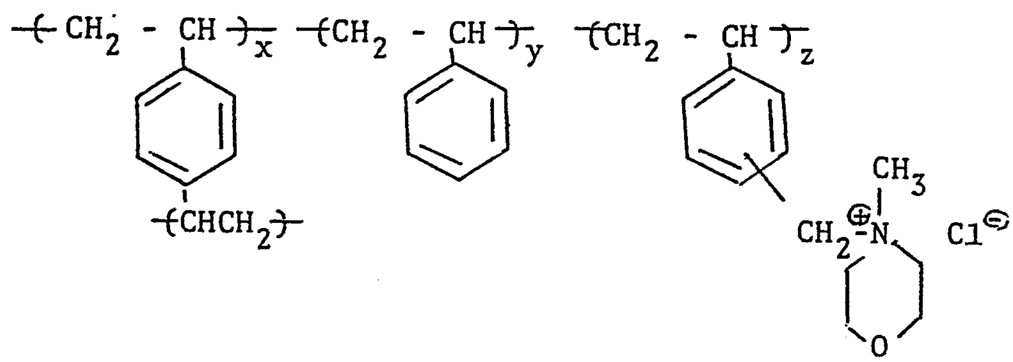

x:y:z = 5:30:65

3.

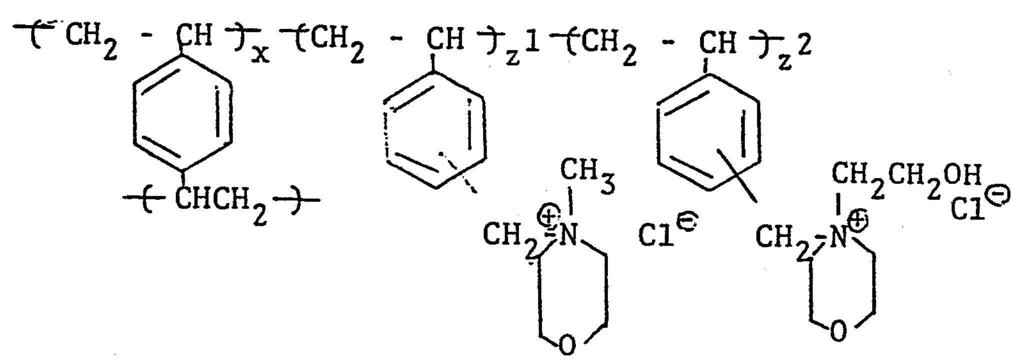

$x:z^1:z^2 = 5:47.5:47.5$
($z^1$ and $z^2$ have the same significance as z)

4.

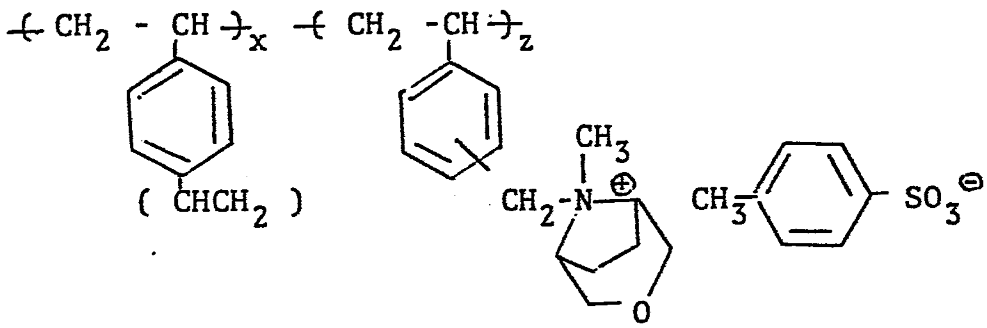

x:z = 5:95

5.

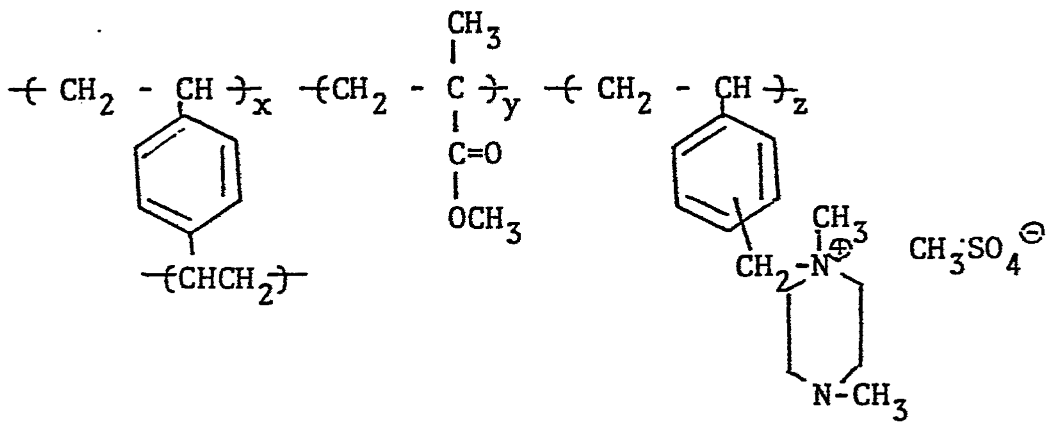

x:y:z = 5:30:65

6.

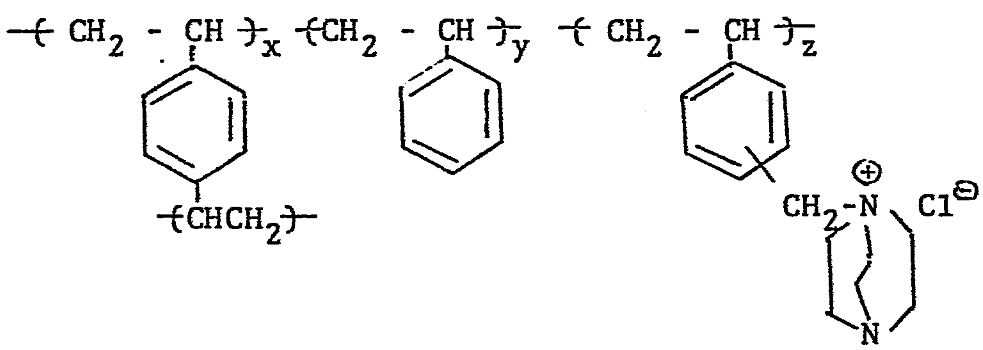

x:y:z = 5:25:70

7. 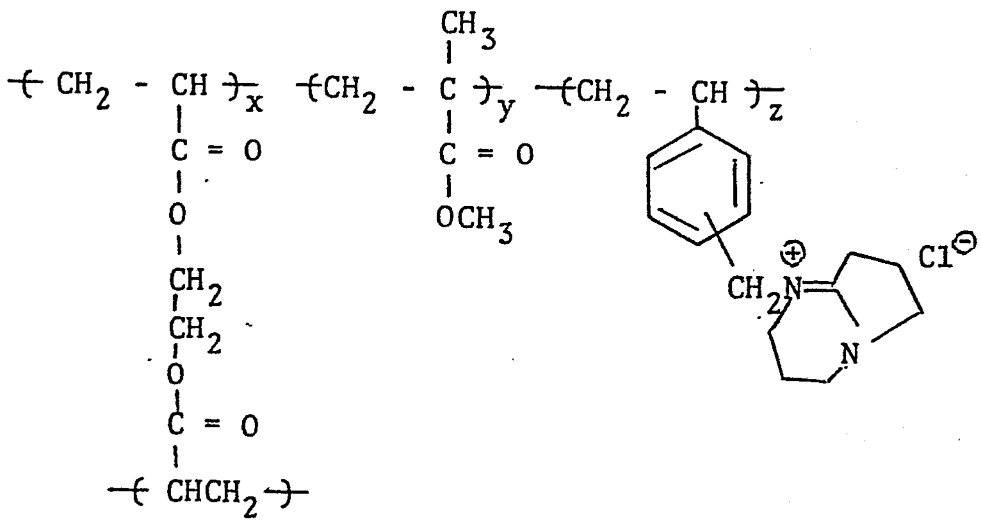

x:y:z = 5:47.5:47.5

8. 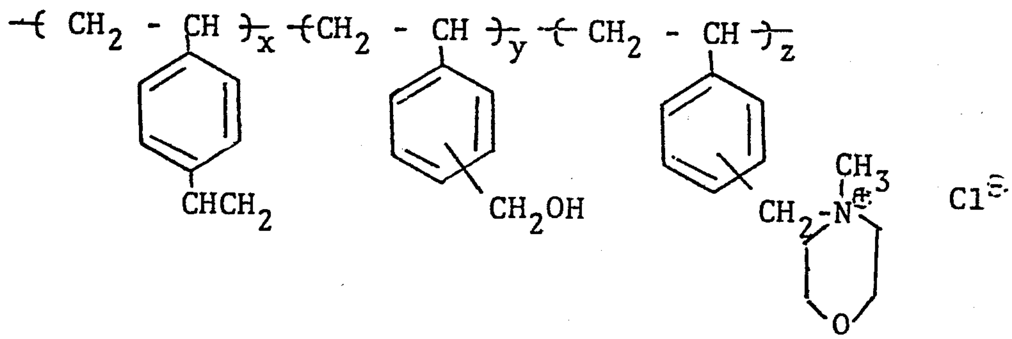

x:y:z = 5:5:90

The polymers of this invention described above can be used as mordants for color diffusion transfer photographic process and also mordants for dyes in antihalation layers described in, for example, U.S. Patent No. 3,282,699.

The layer including the polymer of this invention may be composed of the polymer alone or may contain gelatin or natural or synthetic hydrophilic polymers, generally used in the field of photography, such as polyvinyl alcohol, polyvinylpyrrolidone, etc., and preferably polyvinyl alcohol. A hardenning agent may also be contained. Two or more polymeric mordants of this invention may be used in one layer or in two or more layers, and the polymeric mordant of this invention may be also used with other known mordants in one layer or different layers of the same photographic element. Furthermore, the polymeric mordants of this invention can be used in surplus dye capturing mordant layers described in, for example, U.S. patent No. 3,930,864.

Examples of known mordants which can be used with the polymeric mordants of this invention are the mordants described in U.S. Patent Nos. 4,131,469 and 4,147,548; and Japanese Patent Application (OPI) Nos. 136,626/77; 126,027/79; and 145,529/79.

The total amount of the polymeric mordant used can be easily determined, depending on the amount of

dye or dyes to be mordanted, the kind or composition of the polymeric mordant, and the image-forming process, and is generally about 20 to about 80% by weight of the mordant layer and about 0.5 to about 8 $g/m^2$ (after drying) in coverage thereof, and preferably about 40 to about 60% by weight and about 1 to about 5 $g/m^2$, respectively.

Additional materials used with the polymeric mordants to form photographic elements for the color diffusion transfer process will now be described in detail.

When the photographic element is a photographic film unit, that is a film unit which is adapted to be processed by passing the unit between a pair of juxtaposed pressure-applying members, the photographic element is typically composed of the following elements:

1) a photosensitive element,

2) an image-receiving element containing the polymeric mordant of this invention,

3) at least one support, and, if desired,

4) a means for releasing an alkaline processing composition in the inside of the film unit, such as a rupturable container containing an alkaline processing composition.

In one embodiment of the film unit, a photosensitive element having single or plural silver halide emulsion layers coated on a support is imagewise exposed, superimposed in face-to-face relationship on an image-receiving element having at least one layer composed of the polymeric mordant of this invention on a support, and then processed by spreading an alkaline processing composition between both the elements. It is preferred that the film unit be light-shielded at both sides of the photosensitive element or film unit when the film unit is pulled out from a camera. In this case, the transferred image may be viewed by peeling off the image-receiving element or without peeling off the image-receiving element as described in U.S. Patent No. 3,415,645.

The polymeric mordant of this invention is particularly advantageous when used in a film unit having an image-receiving element that is peeled off after transfer of the dye images.

In another embodiment of this invention, a support, an image-receiving element, and a photosensitive element in the film unit are integrated. For example, a film unit comprising a transparent support having formed thereon an image-receiving layer containing the polymeric mordant of this invention; a substantially opaque light reflecting layer (e.g., a titanium dioxide

layer and a carbon black layer), and a single or plural photosensitive layers is effective as disclosed in Belgian Patent No. 757,960. In this embodiment, after imagewise exposing the photosensitive element, the photosensitive element is disposed on an opaque cover sheet in face-to-face relationship, and then a processing composition is spread between both the elements.

In another embodiment of this invention, an image-receiving element is superimposed on a photosensitive element in an integrated state as disclosed in Belgian Patent No. 757,050. In this embodiment, a transparent support is coated with an image-receiving layer containing the polymeric mordant of this invention, a substantially opaque light-reflecting layer (as, for example, described above), and single or plural light-sensitive layers, and a transparent cover sheet is disposed thereon in face-to-face relationship. A rupturable container containing an alkaline processing composition including an opacifying agent (e.g., carbon black) is disposed adjacent to the uppermost layer of the photosensitive layer and the transparent cover sheet. Such a film unit is imagewise exposed through the transparent cover sheet and then is pulled out from a camera, whereby the rupturable container is ruptured by means of pressure-applying members to spread a processing composition

containing an opacifying agent throughout the space between the photosensitive layer and the cover sheet. Thus, the film unit is light-shielded and the development can proceed.

Furthermore, the polymeric mordant in this invention can be used in an image-receiving layer of a photographic material as described in West German Patent No. 3,045,183.3 that is, a photographic material composed of a non-separable combination of a transparent support having coated successively thereon photosensitive element, an opaque reflective layer, and an image-receiving layer.

The dye image-providing compound which is used in a combination with a silver halide emulsion layer in this invention is either a negative type or positive type and which may be an immobile compound and provides an immobile dye or provides an mobile dye when the photographic element containing this compound is processed with an alkaline processing composition.

Negative-type dye image-providing compounds useful in this invention, include couplers capable of forming or releasing dyes by causing reaction with an oxidized color developing agent known in the art. Examples of such couplers are described in U.S. Patent No. 3,227,550 and Canadian Patent No. 602,607. Preferable

negative-type dye image-providing compounds are dye-releasing redox compounds which release dye by reacting with a developing agent in an oxidized state or an electron transfer agent. Specific examples of these compounds are described in U.S. Patent Nos. 3,928,312, 4,135,929, 4,055,428 and 4,336,332.

Immobile positive-type dye image-providing compounds used in this ivention, include compounds capable of releasing a diffusible dye either without receiving any electron (i.e., without being reduced) or after receiving at least one electron (i.e., after being reduced) during photographic processing under alkaline conditions. Specific examples are described in U.S. Patent Nos. 4,199,354, 3,980,479, 4,199,355, 4,139,379, 4,139,389, and 4,232,107; and Japanese Patent Application (OPI) No. 69,033/78.

Furthermore, a positive-type dye image-providing compound which is initially immobile under alkaline photographic processing conditions is also useful for the photographic element of this invention. Typical examples thereof are dye developing agents described in U.S. Patent Nos. 3,482,972 and 3,880,658.

The final image dye (or precursor thereof) formed from the dye image-providing compound

may be or may not be in a metal complex state. Typical dyes useful for this invention include azo dyes, azomethine dyes, anthraquinone dyes, phthalocyanine dyes, etc., which may be in metal complex states. Among these dyes, cyan dyes, magenta dyes, and yellow dyes are particularly important.

Examples of yellow dye-providing compounds are described in, for example, U.S. Patent Nos. 3,597,200, 3,309,199, 4,013,633, 4,245,028, 4,156,609, 4,139,383, 4,195,992, 4,148,641 and 4,148,643; Japanese Patent Application (OPI) Nos. 114,930/76, 16,130/81 and 71,072/81; Research Disclosure, 17630 (1978); and Research Disclosure, 16475 (1977).

Examples of magenta dye-providing compounds are described in, for example, U.S. Patent Nos. 3,453,107, 3,544,545, 3,932,380, 3,931,144, 3,932,308, 3,954,476, 3,233,237, 4,255,509, 4,250,246, 4,142,891, 4,207,104 and 4,287,292; Japanese Patent Application (OPI) Nos. 106,727/77, 23,628/78, 36,804/80, 73,057/81, 71,060/81 and 134/80.

Examples of cyan dye-providing compounds are described in, for example, U.S. Patent Nos. 3,482,972, 3,929,760, 4,013,635, 4,268,625, 4,171,220, 4,242,435, 4,142,891, 4,195,994, 4,147,544, and 4,148,642; U.K. Patent No. 1,551,138; Japanese Patent Application (OPI)

Nos. 99,431/79, 8827/77, 47,823/78, 143,323/78, 99,431/79, and 71,061/81; European Patent (EPC) Nos. 53,037 and 53,040; and Research Disclosure, 17630 (1978) and 16475 (1977).

Furthermore, a dye-releasing redox compound having a dye moiety the light absorption of which is temporarily shifted can be used in this invention as the dye precursors. Examples of such redox compounds are described in, for example, U.S. Patent Nos. 4,310,612, T-999,003, 3,336,287, 3,579,334, and 3,982,946; U.K. Patent No. 1,467,317; and Japanese Patent Application (OPI) No. 158,638/82.

A typical photographic process for obtaining color diffusion transfer images using such dye-releasing redox compounds is described in Photographic Science and Engineering, Vol. 20, No. 4, pages 155-164, July/August, 1976.

In the above-described process, any silver halide developing agent which can cross-oxidize dye-releasing redox compounds can be used. Such a silver halide developing agent may be present in an alkaline processing composition or in a photographic layer of the photographic element.

Examples of typical silver halide developing agents which can be used in this invention include hydroquinones,

aminophenols, phenylenediamine, and pyrazolidinones (e.g., phenidone, 1-phenyl-3-pyrazolidinone, dimeson (i.e., 1-phenyl-4,4-dimethyl-3-pyrazolidinone), 1-p-tolyl-4-methyl-4-oxymethyl-3-pyrazolidinone, 1-(4'-methoxyphenyl)-4-methyl-4-oxymethyl-3-pyrazolidinone, 1-phenyl-4-methyl-4-oxymethyl-3-pyrazolidinone, etc.), as described in, for example, Japanese Patent Application (OPI) No. 16,131/81.

Black and white developing agent such as pyrazolidinones are particularly preferred because they generally reduce the formation of stain in the image-receiving layer to a greater extent than color developing agents such as phenylenediamines.

The processing composition used for processing the photographic element of this invention is an aqueous solution containing a base such as sodium hydroxide, potassium hydroxide, sodium carbonate, sodium phosphate, etc., and having a pH preferably greater than 9, and more preferably greater than 11.5. The processing composition used in this invention may further contain an antioxidant such as sodium sulfite, an ascorbate, piperidinehexose reductone, etc. The processing composition may further contain a silver ion concentration controlling agent such as potassium bromide. Still further, the processing composition may contain a viscosity

increasing compound such as hydroxyethyl cellulose, sodiumcarboxymethyl cellulose, etc.

Moreover, the alkaline processing composition used in this invention may further contain a development accelerator or dye diffusion accelerator, such as dibenzyl alcohol. The present invention will be explained in greater detail by reference to the following synthesis examples and examples but the present invention should not be construed as limited thereto.

Synthesis Example 1.

(i) Synthesis of poly(divinylbenzene-co-chloromethylstyrene)polymer dispersion:

In a reaction vessel was placed 350 ml of distilled water and after degassing with nitrogen gas, 10 ml of Triton 770, 58.0 g (0.38 mole) of chloromethylstyrene, and 2.6 g (0.02 mole) of divinylbenzene were added thereto followed by heating to 60°C. Thereafter, 20 ml of distilled water degassed with nitrogen gas and added with 1.00 g of potassium persulfate and 10 ml of degassed distilled water added with 0.38 g of sodium hydrogensulfite were simultaneously added to the above mixture, and the resultant mixture was heated with stirring for 5 hours. Then, the reaction mixture was cooled to room temperature and filtrated to provide a polymer dispersion (latex).

(ii) Quaternarization reaction:

In a reaction vessel were placed 150 g of the aforesaid latex having a solid component concentration of 14.0% and 50 g of distilled water, to which was added at room temperature 11.2 g of N-methylmorpholine. Thereafter, the temperature of the mixture was gradually increased to 70°C and the mixture was stirred for 2 hours at that temperature. After cooling the reaction mixture to room temperature, the reaction mixture was filtered to provide a polymer (Illustrated Compound 1) mordant dispersion.

Synthesis Example 2.

(i) Synthesis of poly(divinylbenzene-co-styrene-co-chloromethylstyrene)polymer dispersion:

In a reaction vessel was placed 450 ml of distilled water and after degassing the water with nitrogen gas, a mixture of 10 ml of Triton 770, 42.7 g (0.28 mole) of chloromethylstyrene, 10.4 g (0.1 mole) of styrene, and 2.6 g (0.02 mole) of divinylbenzene was added thereto and the resultant mixture was heated to 70°C with stirring. Then, 20 ml of distilled water degassed with nitrogen gas and added with 1.00 g of potassium persulfate and 10 ml of distilled water degassed and added with 0.38 g of sodium hydrogensulfite were simultaneously added to the mixture and

the resultant mixture was heated with stirring for 4 hours. Thereafter, the reaction mixture was cooled to room temperature and filtered to provide a polymer dispersion (latex).

(ii) Quaternarization reaction:

In a reaction vessel was placed 200 g of the above-described latex having a 10.3% solid component and then 22.6 g of 1,4-diazabicyclo-2,2,2-octane was added thereto at room temperature, followed by stirring for 3 hours at 80°C. The reaction mixture was cooled to room temperature, dialyzed in pure water for 3 days to remove unreacted amine, and then filtered to provide a polymer (Illustrated Compound 6) mordant dispersion.

One of the features of this invention is that the mordant in this invention is used in the form of a dispersion (polymer latex) of a crosslinked polymer, which prevents the transfer of the polymeric mordant from the mordant layer during storage and processing of the photographic element, and also prevents reduction in the concentration of dye and reticulation on the mordant layer caused by transfer of the polymeric mordant.

Furthermore, by employing the polymeric mordant in the form of a dispersion of the crosslinked polymer, good dye images can be formed in a short period of time.

Also, the polymeric mordant of the invention can form dye images in a short period of time, and can strongly retain dyes therein. Dyes mordanted by this mordant exhibit less chemical change or decomposition by light in both oxygen-rich environments and the oxygen-poor environments. Accordingly, dyes mordanted with this mordant retain exceptionally good properties when stored for a long period of time.

The above-described advantages of this invention are particularly evident when the polymeric mordant of this invention is used in a "peel-apart" photographic element.

Example 1

Each of three photosensitive sheets (a) to (c) was prepared by coating, in succession, the following layers on a transparent polyester support:

(1) A mordant layer containing 3.0 $g/m^2$ of the polymeric mordant of this invention and 3.0 $g/m^2$ of gelatin.

(2) A white light-reflecting layer containing 20 $g/m^2$ of titanium dioxide and 2.0 $g/m^2$ of gelatin.

(3) A light-shielding layer containing 1.36 $g/m^2$ of carbon black and 1.00 $g/m^2$ of gelatin.

(4) A layer containing 0.40 $g/m^2$ of a cyan dye releasing redox (hereinafter referred to as DRR) compound having the following structure, 0.10 $g/m^2$ of tricyclohexyl phosphate, 0.01 $g/m^2$ of 2,5-di(t-pentadecyl)-hydroquinone, and 0.8 $g/m^2$ of gelatin.

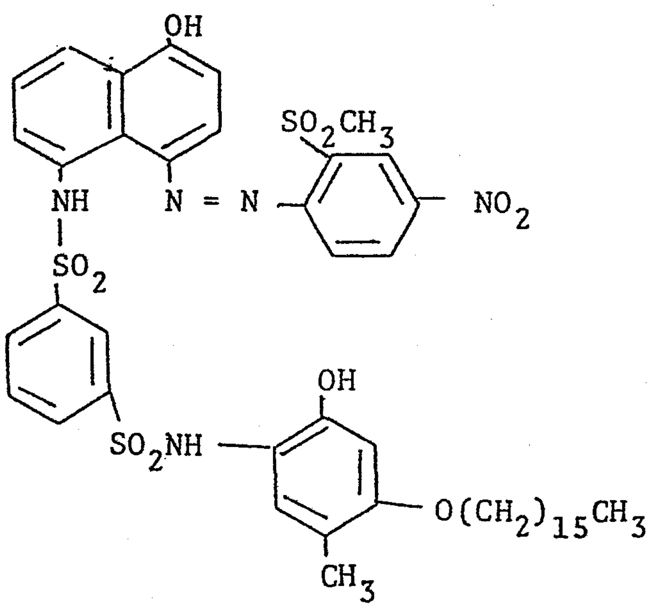

(5) A layer comprising a red-sensitive internal latent image-type direct reversal silver bromide emulsion containing 1.03 $g/m^2$ of silver and 1.2 $g/m^2$ of gelatin, 0.05 $mg/m^2$ of a nucleating agent having the

following structure, and 0.13 $g/m^2$ of sodium pentadecyl-hydroquinonesulfonate.

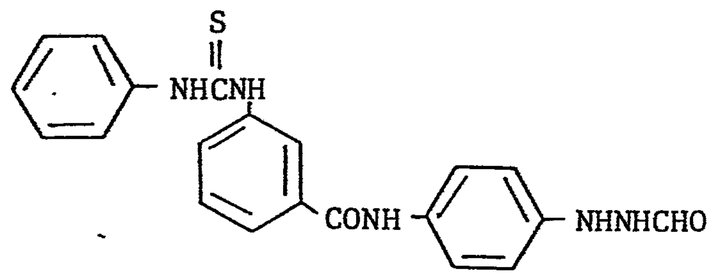

(6) A layer containing 0.71 $g/m^2$ of 2,5-di-(tert-pentadecyl)hydroquinone, 0.24 $g/m^2$ of a copolymer of vinylpyrrolidone and vinyl acetate (7 : 3 molar ratio), and 0.6 $g/m^2$ of gelatin.

(7) A layer containing 0.4 $g/m^2$ of gelatin.

(8) A layer containing 0.32 $g/m^2$ of a magenta DRR compound having the following structure, 0.08 $g/m^2$ of tricyclohexyl phosphate, 0.01 $g/m^2$ of 2,5-di(tert-pentadecyl)hydroquinone, and 0.6 $g/m^2$ of gelatin.

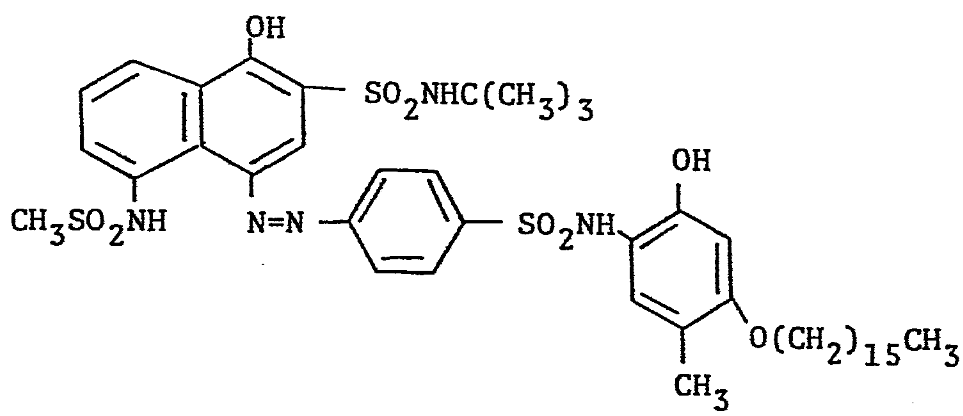

(9) A layer comprising a green-sensitive internal

latent image-type direct reversal silver bromide emulsion containing 0.82 $g/m^2$ of silver and 0.9 $g/m^2$ of gelatin, 0.03 $mg/m^2$ of the nucleating agent used in layer (3), and 0.08 $g/m^2$ of sodium pentadecylhydroquinonesulfonate.

(10) A layer containing 0.71 $g/m^2$ of 2,5-di(tert-pentadecyl)hydroquinone, 0.24 $g/m^2$ of a copolymer of vinylpyrrolidone and vinyl acetate (7 : 3 molar ratio), and 0.6 $g/m^2$ of gelatin.

(11) A layer containing 0.4 $g/m^2$ of gelatin.

(12) A layer containing 0.53 $g/m^2$ of a yellow DRR compound having the following structure, 0.13 $g/m^2$ of tricyclohexyl phosphate, 0.01 $g/m^2$ of 2,5-di(tert-pentadecyl)hydroquinone, and 0.7 $g/m^2$ of gelatin.

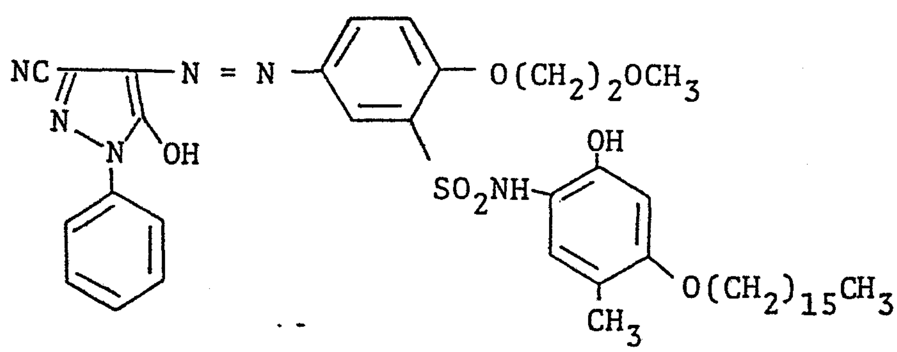

(13) A layer comprising a blue-sensitive internal latent image-type direct reversal silver bromide emulsion containing 1.09 $g/m^2$ of silver and 1.1 $g/m^2$ of

gelatin, 0.04 $g/m^2$ of the nucleating agent used in layer (5), and 0.07 $g/m^2$ of sodium pentadecylhydroquinonesulfonate.

(14) A layer containing 1.0 $g/m^2$ of gelatin and 1,2-vis(vinylsulfonylacetamide).

A rupturable container containing 0.8 g of a processing composition having the following formula;

Processing Composition:

| | |
|---|---|
| 1-(p-tolyl)-4-hydroxymethyl-4-methyl-3-pyrazolidinone | 6.9 g |
| Tert-butylhydroquinone | 0.2 g |
| 5-Methylbenzotriazole | 3.5 g |
| Sodium Sulfite (anhydrous) | 0.2 g |
| Carboxymethyl Cellulose Sodium Salt | 58 g |
| Carbon Black | 150 g |
| Potassium Hydroxide (28% aqueous solution) | 200 ml. |
| Benzyl Alcohol | 1.5 ml. |
| Water | 580 ml. |

A cover sheet was prepared by coating, in succession, the following layers on a transparent polyester support.

(15) A layer containing 11 $g/m^2$ a copolymer of acrylic acid and butyl acrylate (80 : 20 weight ratio) and 0.44 $g/m^2$ of 1,4-bis(2,3-epoxypropoxy)butane.

(16) A layer containing 3.8 $g/m^2$ of acetyl

cellulose (forming 39.4 g of acetyl group by the hydrolysis of 100 g of acetyl cellulose), 0.2 $g/m^2$ of a copolymer (having a molecular weight of about 50,000) of styrene and maleic anhydride (60 : 40 weight ratio), and 0.115 $g/m^2$ of 5-(β-cyanoethylthio)-1-phenyltetrazole.

(17) A layer containing 2.5 $g/m^2$ of a copolymer latex of vinylidene chloride, methyl acrylate, and acrylic acid in an 85 : 12 : 3 weight ratio, and 0.05 $g/m^2$ of a polymethyl methacrylate latex having particle sizes of 1 to 3 microns.

The three photosensitive sheets (a) to (c) of this invention described above contained Compounds 1, 2 and 6 respectively as the polymeric mordants of this invention.

Comparison photosensitive sheets (p) and (q) were also prepared in the same manner described above except that the following comparison quaternary ammonium salt polymers were used in layer 1 in place of the polymeric mordant of this invention.

Comparison Polymer 1: poly(N-methyl-N-vinylbenzylpiperidiniumammonium chloride-co-styrene-co-divinylbenzene).

Comparison Polymer 2: poly(N,N,N-trimethyl-N-vinylbenzylammonium chloride-co-styrene-co-divinylbenzene)

After imagewise exposing each of the above-described photosensitive sheets (a) to (b) and comparison photosensitive sheets (p) and (q), each photosensitive sheet was assembled with the above-described processing composition and the cover sheet in an integrated state and the processing composition was spread between the photosensitive sheet and the cover sheet at a thickness of 85 μm at 25°C by means of pressure-applying members, whereby transferred color images were obtained. The densities of the color images were measured on each sample and the results are shown in Table 1.

From the results shown in Table 1 below, it can be seen that the dyes mordanted by the polymeric mordants, Compounds 1, 2 and 6 have better light fastness than the dyes mordanted by the Comparison Polymer 1. Also, it can be seen that although the dyes mordanted by the Comparison Polymer 2 have almost same light fastness as the dyes mordanted by Compounds 1, 2 and 6, the dyes mordanted by the Comparison Polymer 2 are far inferior to the dyes mordanted by the Compounds 1, 2 and 3 in the point of the transferred dye density.

Thus, by using polymeric mordant Compounds 1, 2 and 6, dye images having both good light fastness and high density can be obtained.

In addition, photosensitive sheets (a) - (c), (p)

and (q), prepared as above were exposed through a color test chart. Each photosensitive sheet was superposed on a cover sheet prepared as described above and then the above-described processing composition was spread between the sheets at a thickness of 85 μm by means of a pressure-applying members to obtain transferred color images.

The mono-sheet assemblies thus prepared containing transferred images were allowed to dry for 2 weeks at 40°C and 30% relative humidity, and thereafter, the photosensitive sheet sides of the mono-sheet assemblies were irradiated by a xenon lamp at 100,000 lux for 4 hours. The reduction in density obtained in the dye images by the irradiation is also shown in Table 1, with the reflection density before the irradiation having the value 1.0.

Table 1

| Photosensitive sheet | Polymeric mordant for layer (1) | Reduction in density at initial density of 1.0 | | $D_{max}$ | | |
|---|---|---|---|---|---|---|
| | | Cyan | Magenta | Cyan | Magenta | Yellow |
| (a) | Compound 1 | 0.12 | 0.10 | 2.30 | 2.18 | 2.20 |
| (b) | Compound 2 | 0.14 | 0.12 | 2.38 | 2.20 | 2.23 |
| (c) | Compound 6 | 0.14 | 0.13 | 2.32 | 2.16 | 2.22 |
| (p) | Comparison Polymer 1 | 0.20 | 0.20 | 2.40 | 2.20 | 2.25 |
| (q) | Comparison Polymer 2 | 0.14 | 0.13 | 1.90 | 1.97 | 1.85 |

Example 2

A photosensitive sheet was prepared by coating, in succession, layers (4) to (14) as in Example 1 on a black support. Also, three dye image-receiving sheets (d) to (f) were prepared by coating, in succession, layers (15), (16), (17) and (1 ) of Example 1 on a white support having a carbon black layer and a titanium white layer coated, in succession, on the other surface thereof, and further coating on the layer (1) a layer of 1 $g/m^2$ of phthalated gelatin.

The three dye image-receiving sheets (d) to (f) according to the invention contained above-described Compounds (1), (2) and (6), respectively.

Comparison dye image-receiving sheets (r) and (s) were also prepared following the above procedure except that the two comparison quaternary ammonium salt polymers as used in Example 1 were used in place of the polymeric mordants in layer (1).

After exposing the above-described photosensitive sheets through a color test chart, the photosensitive sheets were superimposed on the above-described dye image-receiving sheets, a processing composition having the following formula (II) was spread between both the sheets at a thickness of 60 μm by means of pressure-applying members, and the photosensitive sheets were

peeled apart from the dye image-receiving sheets having dye images found thereon after 2 minutes.

The dye image-receiving sheets having the transferred images thus formed were dried and irradiated by a fluorescent lamp at 17,000 lux for 3 days. The reduction in density caused by the irradiation is shown in Table 2 below with the reflection density before irradiation being assigned the value 1.0.

Processing composition (II):

| | |
|---|---|
| Benzyl Alcohol | 0.20 ml |
| 1-(p-tolyl)-4-hydroxymethyl-4-methyl-3-pyrazolidinone | 0.3 g |
| Methyl-hydroquinone | 0.012 g |
| 5-Methylbenzotriazole | 0.6 g |
| Sodium Sulfite | 0.18 g |
| Hydroxymethyl Cellulose | 4 g |
| Potassium Hydroxide (28% Aq. soln.) | 22.4 ml |
| Water | 67 ml |

Furthermore, unexposed photosensitive sheets (d) - (f) and (r) - (s) prepared as described above were superimposed on each of the above-described dye image-receiving sheets, the processing composition (II) described above was spread between the sheets at a thickness of 60 µm by means of pressure-applying members, and the photosensitive sheets were peeled apart from the dye image-receiving sheets after different periods

of time. By changing development time before performing peel-apart, a time ($T_{80\%}$, unit: sec.) required for reaching a density of 80% of the finally attained density ($D\infty$) was measured in each sample. The results are shown in Table 2.

From the results shown in Table 2, it can be seen that the dyes mordanted by dye image-receiving sheets using the polymeric mordants of this invention had higher light fastness than the dyes mordanted by comparison polymer 1. Also, although the light fastness of the dyes mordanted by comparison polymer 2 was almost same as those of the dyes mordanted by Compounds (1), (2) and (6), it can be seen that the image-forming speed was very low (i.e., the $T_{80\%}$ value was large) when using comparison polymer 2.

From the above results, it is clear that even in the case of a peel-apart photographic element, the polymeric mordants of the invention produce transferred dyes having both excellent light fastness and high transfer speed of dyes.

Table 2

| Photosensitive Sheet | Polymeric Mordant for Layer (1) | Reduction in Initial Density 1.0 | | $t_{80\%}$ (sec.) | | |
|---|---|---|---|---|---|---|
| | | Cyan | Magenta | Cyan | Magenta | Yellow |
| (d) | Compound 1 | 0.13 | 0.13 | 91 | 85 | 84 |
| (e) | Compound 2 | 0.14 | 0.15 | 90 | 85 | 85 |
| (f) | Compound 6 | 0.15 | 0.15 | 92 | 86 | 86 |
| (r) | Comparison Polymer 1 | 0.25 | 0.23 | 90 | 86 | 84 |
| (s) | Comparison Polymer 2 | 0.13 | 0.12 | 109 | 103 | 100 |

CLAIMS

1. A photographic element comprising a support having thereon at least one layer provided by coating a composition comprising a polymeric mordant latex of a crosslinked polymer comprising a monomer unit represented by formula (I):

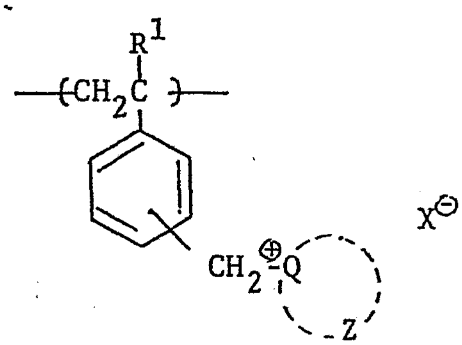

(I)

wherein Q represents a quaternary nitrogen atom; Z represents an atomic group necessary for forming a nitrogen-containing heterocyclic ring formed with Q; said nitrogen-containing heterocyclic ring further contains at least one hetero atom in addition to the quaternary nitrogen atom shown by Q; $R^1$ represents a hydrogen atom or a methyl group; and $X^{\ominus}$ represents an anion.

2. A photographic element as claimed in Claim 1, wherein the polymer having the monomer unit represented by general formula (I) is a copolymer selected from the group consisting of copolymers represented by formulae (II) and (III);

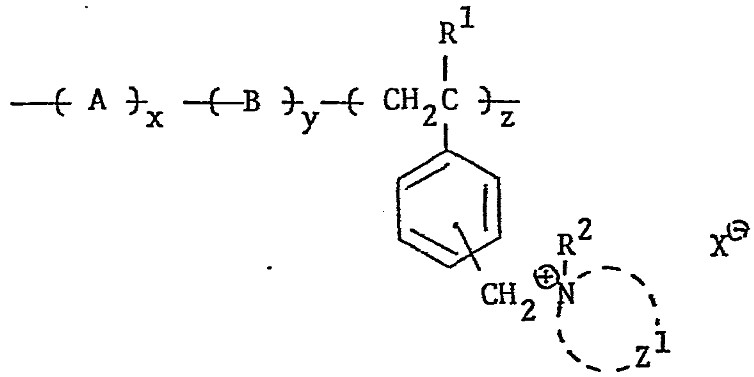

(II)

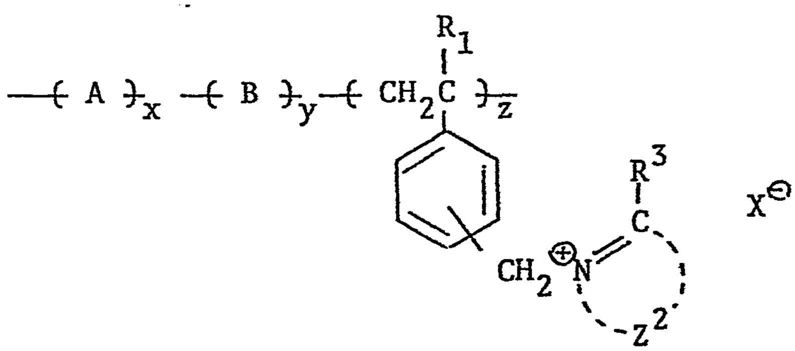

(III)

wherein A represents a monomer unit (linking component) derived from a copolymerizable monomer having at least two ethylenically unsaturated groups; B represents a monomer unit derived from a copolymerizable ethylenic monomer; $R^1$ represents a hydrogen atom or a methyl group; $R^2$ represents an alkyl group or an aralkyl group; $R^3$ represents a hydrogen atom, an alkyl group or an aralkyl group; $Z^1$ and $Z^2$ each represents an atomic group necessary for completing a nitrogen-containing heterocyclic ring and contains at least one hetero atom, or said $R^2$ and $Z^1$ or $R^3$ and $Z^2$ form an additional ring, or said nitrogen-containing heterocyclic ring form a condensed ring with a nucleus.

3. A photographic element as claimed in Claim 2, wherein x is 0.05 to 10 mole%, y is 0 to 89.95 mole% and z is 10 to 99 mole%.

4. A photographic element as claimed in Claim 1, wherein said polymer latex is an aqueous dispersion latex.

5. A photographic element as claimed in Claim 2, wherein A is at least one monomer unit derived from a polymerizable monomer represented by the formula

$$\left( CH_2 = \overset{\displaystyle R^4}{\overset{|}{C}} \right)_n T$$

wherein n represents an integer of at least 2, $R^4$ represents a hydrogen atom or methyl group, and T represents a linkage group.

6. A photographic element as claimed in Claim 5, wherein said monomer is selected from the group consisting of divinylbenzene, ethylene glycol dimethacrylate, propylene glycol dimethacrylate, neopentyl glycol dimethacrylate, tetramethylene glycol diacrylate, tetramethylene glycol dimethacrylate.

7. A photographic element as claimed in Claim 2, wherein B is at least one monomer unit derived from an ethylenically unsaturated monomer selected from a group

consisting ethylene, propylene, 1-butene, isobutene, styrene, α-methylstyrene, vinyltoluene, monoethylenically unsaturated ester of an aliphatic acid, an ethylenically unsaturated monocarboxylic acid and dicarboxylic acid ester, acrylonitrile and a diene.

8. A photographic element as claimed in Claim 2, wherein said alkyl group represented by $R^2$ and $R^3$ each represents an unsubstituted alkyl group, an alkoxyalkyl group, a cyanoalkyl group, a halogenated alkyl group, a hydroxyalkyl group, an alkoxycarbonylalkyl group or an alkenyl-substituted alkyl group.

9. A photographic element as claimed in Claim 2, wherein said aralkyl group represented by $R^2$ or $R^3$ is an unsubstituted aralkyl group, an alkylaralkyl group, an alkoxyaralkyl group, a cyanoaralkyl group, a perfluoroalkoxyaralkyl group or a halogenated aralkyl group.

10. A photographic element as claimed in Claim 2, wherein said heterocyclic ring of formula (II) is

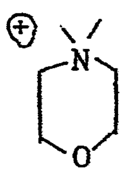 , 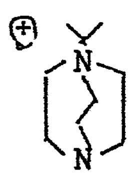 , 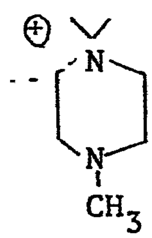 , 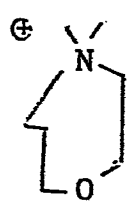 , 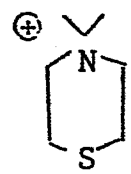 ,

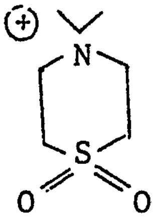 , 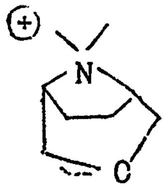 , 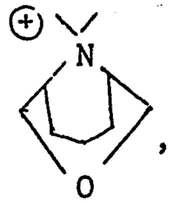 , 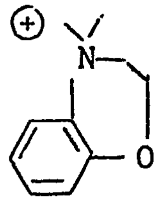

11. A photographic element as claimed in claim 2, wherein said heterocyclic ring of formula (III) is

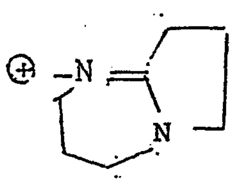 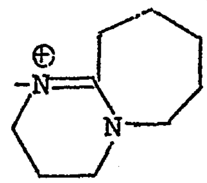

12. A photographic element as claimed in claim 1, wherein $X^{\ominus}$ is an anion selected from the group consisting of a halide ion, an alkylsulfate ion, an alkylsulfonate ion, an arylsulfonate ion, an acetate ion and a sulfate ion.

13. A photographic element as claimed in claim 1, wherein the photographic element is a photographic film unit and said polymer mordant is contained in an image-receiving element.

14. A photographic element as claimed in claim 1, wherein said polymeric mordant is contained in an antihalation layer in the photographic element.

15. A photographic element as claimed in claim 1, wherein the layer including said polymeric mordant composes of the polymer alone.

16. A photographic element as claimed in claim 1, wherein the layer including said polymeric mordant contains at least one of compounds selected from the group consisting of gelatin and natural and synthetic hydrophilic polymers.

17. A photographic element as claimed in claim 1, wherein said layer contains 20 to 80 wt% of the polymeric mordant.

18. A photographic element as claimed in claim 1, wherein said polymeric mordant is contained in an amount of 0.5 to 8 $g/m^2$ (in dried state).